Europäisches Patentamt

European Patent Office

Office européen des brevets

(19)

(11) Numéro de publication: **0 282 417**
**A1**

(12) **DEMANDE DE BREVET EUROPEEN**

(21) Numéro de dépôt: 88400573.7

(22) Date de dépôt: 11.03.88

(51) Int. Cl.⁴: **B 25 J 15/04**
// B23K11/36

(30) Priorité: 11.03.87 FR 8703354

(43) Date de publication de la demande:
14.09.88 Bulletin 88/37

(84) Etats contractants désignés:
DE ES FR GB IT SE

(71) Demandeur: **RENAULT AUTOMATION**
**8/10 avenue Emile Zola**
**F-92109 Boulogne-Billancourt (FR)**

(72) Inventeur: **Michel, Robert**
**14, rue des Bruyères**
**F-95540 Mery Sur Oise (FR)**

(74) Mandataire: **Saint Martin, René**
**Régie Nationale des Usines Renault Direction des**
**Recherches et Développements Service 0804 8-10,**
**Avenue Emile-Zola**
**F-92109 Boulogne Billancourt Cedex (FR)**

(54) Dispositif de changement d'outil de robot.

(57) Le dispositif de changement d'outil de robot, comporte une tête d'accouplement montée à l'extrémité du bras du robot et coopérant avec un organe d'accouplement de l'outil, des éléments de connexion étant portés par la tête d'accouplement du robot et l'organe d'accouplement de l'outil pour assurer la continuité des lignes d'alimentation en énergie de l'outil. La tête d'accouplement du bras de robot présente un piston central de bridage (12) s'emmanchant dans un alésage (32, 33) de l'outil, ce piston étant soumis à des ressorts destinés à brider l'accouplement et qui sont comprimés pour le débridage et que les organes de connexion (40, 50, 60) sont disposés autour dudit piston de bridage.

FIG.2

EP 0 282 417 A1

## Description

### DISPOSITIF DE CHANGEMENT D'OUTIL DE ROBOT

La présente invention se rapporte à un dispositif de changement d'outil de robot, comportant une tête d'accouplement montée à l'extrémité du bras du robot et coopérant avec un organe d'accouplement de l'outil, des éléments de connexion étant portés par la tête d'accouplement et l'organe d'accouplement de l'outil pour assurer la continuité des lignes d'alimentation en énergie de l'outil.

On connait des dispositif de changement d'outils pour robots.

Le brevet français 2 426 548 décrit un robot dans lequel un moteur d'axe du robot entraîne en rotation un accouplement assurant par vissage la liaison avec l'outil. Le temps de changement d'outil, du fait de la conception purement mécanique, est long.

Le dispositif de changement d'outil décrit dans le brevet européen 0 151 819 nécessite autant d'actionneurs que de supports de réception des outils et d'autre part est adapté à des faisceaux internes au poignet.

Une autre catégorie de dispositifs utilisent un actionneur en général pneumatique pour assurer le verrouillage ou le déverrouillage. L'opération de changement d'outil est assez brève mais l'encombrement est important, ce qui conduit à augmenter le déport du centre de gravité de l'outil par rapport à l'extrémité du bras du robot.

La présente invention a pour but de fournir un dispositif de changement d'outils assurant un bridage ou un débridage rapide, sous un faible encombrement de manière à ne pas limiter les débattements du poignet du robot et à limiter au minimum la charge portée par les axes du poignet.

Le dispositif selon l'invention est caractérisé par le fait que la tête d'accouplement du bras de robot présente un piston central de bridage s'emmanchant dans un alésage de l'outil, ce piston étant soumis à des ressorts destinés à brider l'accouplement et qui sont comprimés pour le débridage et que les organes de connexion sont disposés autour dudit piston de bridage.

Selon une caractéristique, le piston central de bridage porte des billes de verrouillage mobiles radialement dans les logements de guidage du piston sous l'action d'un ressort susceptible d'être comprimé pour le débridage.

Selon une autre caractéristique, la tête d'accouplement comporte une alimentation en fluide sous pression susceptible de déplacer le piston de bridage dans le sens du débridage et un piston interne de manoeuvre des billes de verrouillage dans le sens du débridage.

L'invention va maintenant être décrite avec plus de détails en se référant à un mode de réalisation donné à titre d'exemple et représenté par les dessins annexés, sur lesquels :

- la figure 1 est une vue en élévation d'un robot équipé du dispositif de changement d'outil selon l'invention,
- la figure 2 une vue de détail, en coupe, montrant le détail de la tête d'accouplement disposée à l'extrémité du bras du robot et de l'organe d'accouplement de l'outil,
- la figure 3 est une vue de détail en plan de l'organe d'accouplement de l'outil,
- la figure 4 est une vue en coupe montrant une connexion électrique entre le bras du robot et l'outil,
- la figure 5 est une vue en coupe montrant une connexion pneumatique,
- la figure 6 est une vue en coupe d'une connexion électrique de puissance,
- la figure 7 est une vue d'un support de réception d'outil,
- la figure 8 est une vue de dessus du support,
- la figure 9 est un schéma de la commande.

En se référant aux dessins, le robot désigné 1 dans son ensemble, comporte un bras mobile 2 dont l'extrémité est équipé d'une tête d'accouplement 10 destinée à recevoir un outil 3.

L'outil 3 comporte un organe d'accouplement 30 qui coopère avec la tête d'accouplement.

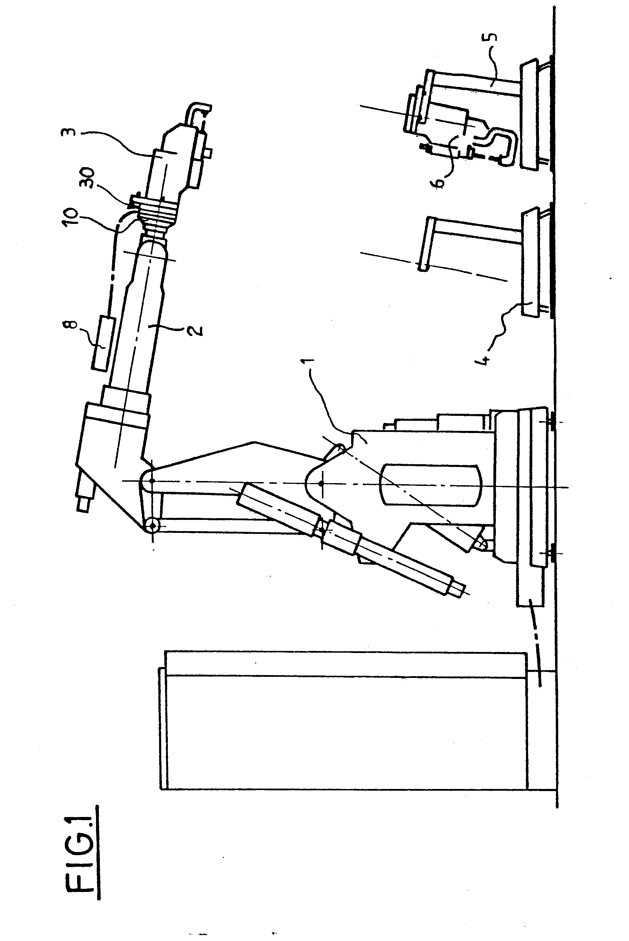

On a représenté sur la figure 1, en 4 et 5, deux supports d'outils destinés chacun à recevoir un outil en position de repos. Le support 5 porte un outil 6.

Dans le mode de réalisation décrit, les outils sont des pinces à souder de type pinces transformateurs.

Le bras de robot porte un ensemble de commande 8 agissant sur les différents fluides utilisés (air, eau) pour réaliser le changement d'outil.

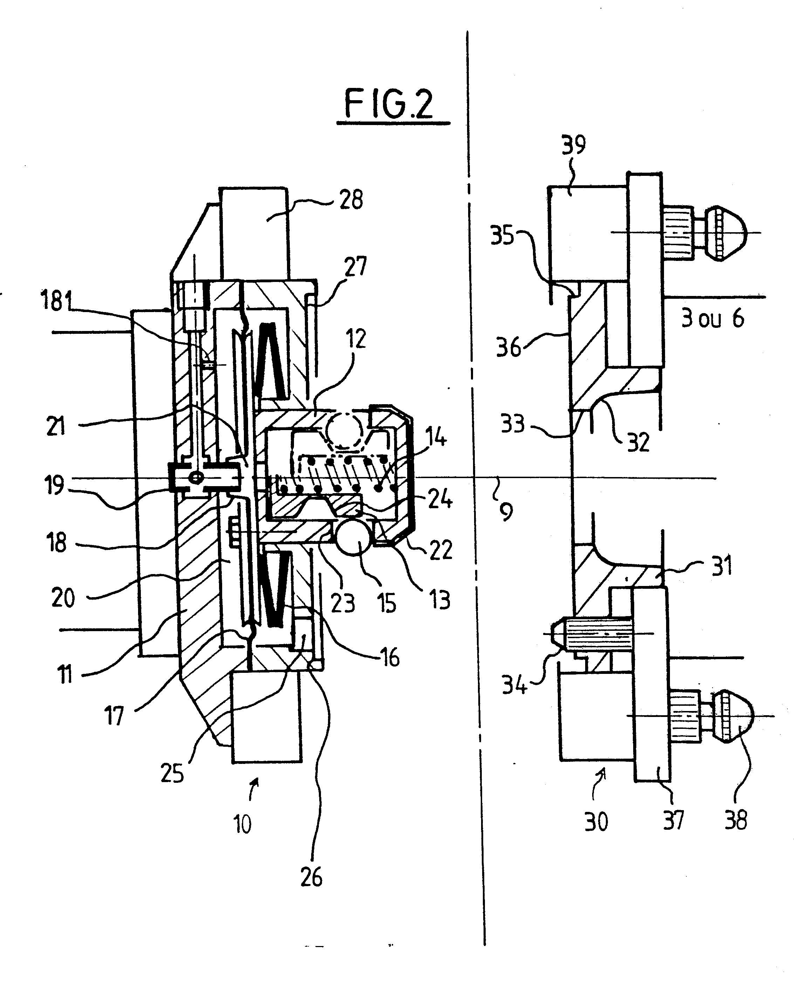

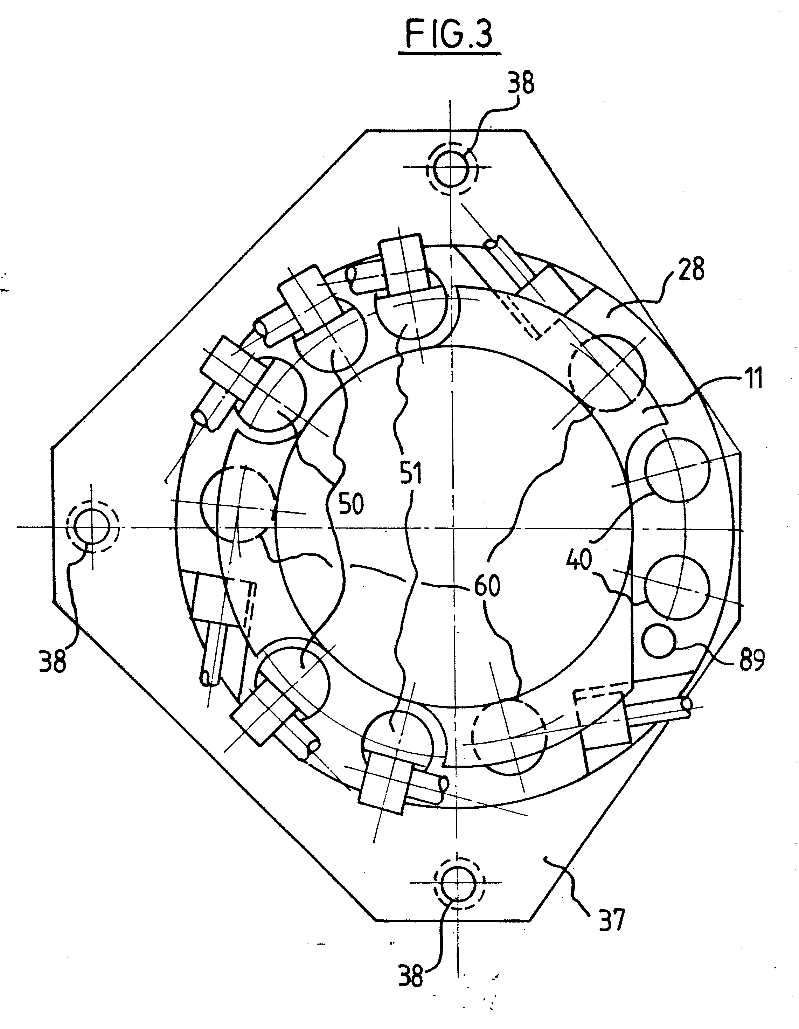

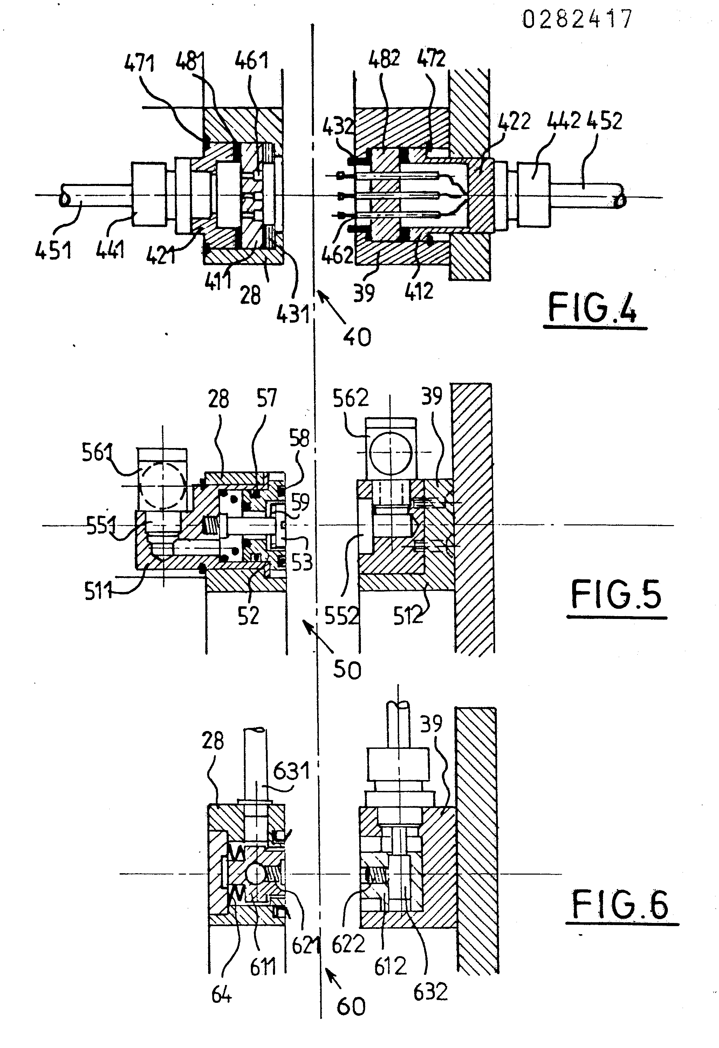

La tête d'accouplement 10 du robot (côté gauche de la figure 2) comprend un corps de couplage 11 fixe à l'extrémité du bras 2 et présentant une face avant 27 servant d'appui à l'outil.

La tête d'accouplement comprend un piston central de bridage 12 qui coulisse dans un alésage du corps 11 selon l'axe de couplage 9. Ce piston est soumis à des ressorts 16 (rondelles ressorts) tendant à le faire rentrer dans le corps 11 et à un organe d'actionnement de type pneumatique susceptible de le déplacer rectilignement en le faisant sortir et en contrariant l'action des ressorts.

Le corps 11 présente un chambre 20 dans laquelle se loge les ressorts 16 et une membrane-diaphragme 17 solidaire du piston 12. Cette membrane délimite une chambre susceptible d'être alimentée sous pression par la cavité 21.

Le piston de bridage 12 porte des billes de verrouillage 15 qui sont mobiles radialement dans des logements de guidage 23 du piston. Elles sont déplacées par l'intermédiaire d'un piston interne de manoeuvre 13 logé dans une chambre du piston 12 et soumis d'une part à un ressort 14 et à l'action du fluide sous pression. La commande des billes s'effectue par une rampe 24 du piston 13. Le fluide sous pression est amené sur la face arrière du piston interne par une conduite 19 traversant le diaphragme 17 par un joint 18.

Le piston 13 coulisse entre deux positions extrêmes. Dans l'une de ces positions (partie inférieure de la figure 2), le ressort 14 est détendu. Dans l'autre position (partie supérieure), le ressort est comprimé sous l'action du fluide. A chacune de ces positions est associée une position du jeu de billes 15. Celles-ci sont soit dépassantes (sorties) du piston 12 soit affleurantes (rentrées). L'échappement des billes est empêché par une coiffe 22 venant obturer partiellement les logements 23.

L'organe d'accouplement femelle 30 ménagé sur l'outil comprend un corps 31 présentant une face de bridage 36 qui est percée par un alésage central 33 débouchant dans un chambrage 32 de plus grand diamètre raccordé par un épaulement d'appui des billes. Le piston 12 s'emmanche dans le corps 31 par l'alésage 33 qui a un diamètre correspondant au diamètre du piston 12. Le chambrage 32 est destiné à recevoir les billes 15 en position "sorties".

Le corps 31 porte des pions de centrage 34 qui sont destinés à s'engager dans des logements correspondants 25 de la tête d'accouplement du robot. Le corps 31 forme un diamètre de centrage mâle 35 qui coopère avec un alésage 26 ménagé dans le carter 11.

Le corps 31 de l'outil est solidaire d'une plaque 37 qui porte des éléments de centrage 38 permettant le positionnement sur les supports 4 et 5.

Les connecteurs sont répartis sur deux couronnes 28 et 39 centrées respectivement sur les corps 11 et 31. Les connecteurs 50 (figure 5) assurent l'alimentation en eau sous pression et le connecteurs 51 (figure 5) assurent l'alimentation d'air comprimé. Les connecteurs 40 (figure 4) assurent la commande électrique et les contrôles effectués sur la pince. Les connecteurs 60 (figure 6) assurent l'alimentation des courants électriques de soudure.

Les connecteurs électriques 40 sont logés dans des alésages ménagés dans les deux couronnes 28 et 39. Ils comportent des canons 411 et 412 logés dans les alésages et porteurs des plots de contact fixes 461 et des plots de contact 462 déplaçables axialement. Des fiches 421 et 422 servent de support aux presses étoupes 441 et 442 assurant l'étanchéité des câbles 451 et 452. Ces fiches sont liées aux couronnes 28 et 39 par des circlips 471 et 472 et détrompées en rotation par un pion non représenté.

L'étanchéité des fiches 421 et 422 avec les canons 411 et 412 est faite par les joints 481 et 482. Une bague élastique 431 coopère avec un collet d'étanchéité 432 qui s'engage dans un alésage de la couronne 28. Le connecteur comporte des moyens de blindage. Les pièces 28, 432, 39 sont métalliques et assurent la continuité du blindage vis-à-vis des parasites.

La figure 5 représente les connecteurs hydrauliques et pneumatiques. Il s'agit de connecteurs à simple obturation côté robot.

Les conduits de fluide sont connectés par des raccords 561 et 562 orientables, implantés sur les embases 511 et 512. L'embase 511 est elle-même tournante dans la couronne 28 et tenue par un circlip contrairement à l'embase 512 vissée dans 39.

L'embase 511 possède une cavité cylindrique dans laquelle le piston 52 rendu étanche par le joint 57 peut coulisser. Le piston présente un orifice central susceptible d'être traversé par le fluide. Un ressort le plaque contre le joint plat 59 maintenu par la vis 53. L'approche de la tête de robot sur l'organe d'accouplement outil vient appuyer le piston 52 sur la face plane de l'embase 552 et crée une cavité étanche par le joint 58 puis repousse le piston 52 et autorise le passage du fluide en libérant le joint 59. La face arrière de ce piston est soumise au fluide le traversant. L'équilibre des pressions sur le piston 52 est tel que ce piston est d'autant plus plaqué sur l'embase 552 que la pression est élevée. Il joue le rôle d'un clapet en coopérant avec la vis 53 et son joint 59. Il autorise le passage du fluide lorsque la tête du robot est contre l'outil et empêche la circulation de fluide lorsque la tête d'accouplement est séparée de l'outil.

La figure 6 montre un connecteur électrique de puissance. Les câbles électriques 631 et 632 sont munis à leurs extrémités de cosses serrées par les vis 621 et 622 dans des embases métalliques 611 et 612 servant à établir le contact. L'embase 612 est fixée sur la couronne 39 réalisée en matière isolante. L'embase 611 est mobile par rapport à 28 mais plaquée en position de relief par le ressort 64 précontraint. L'appui de 611 sur 612 lors du rapprochement des deux interfaces 10 et 30 réalise le contact électrique des deux embases.

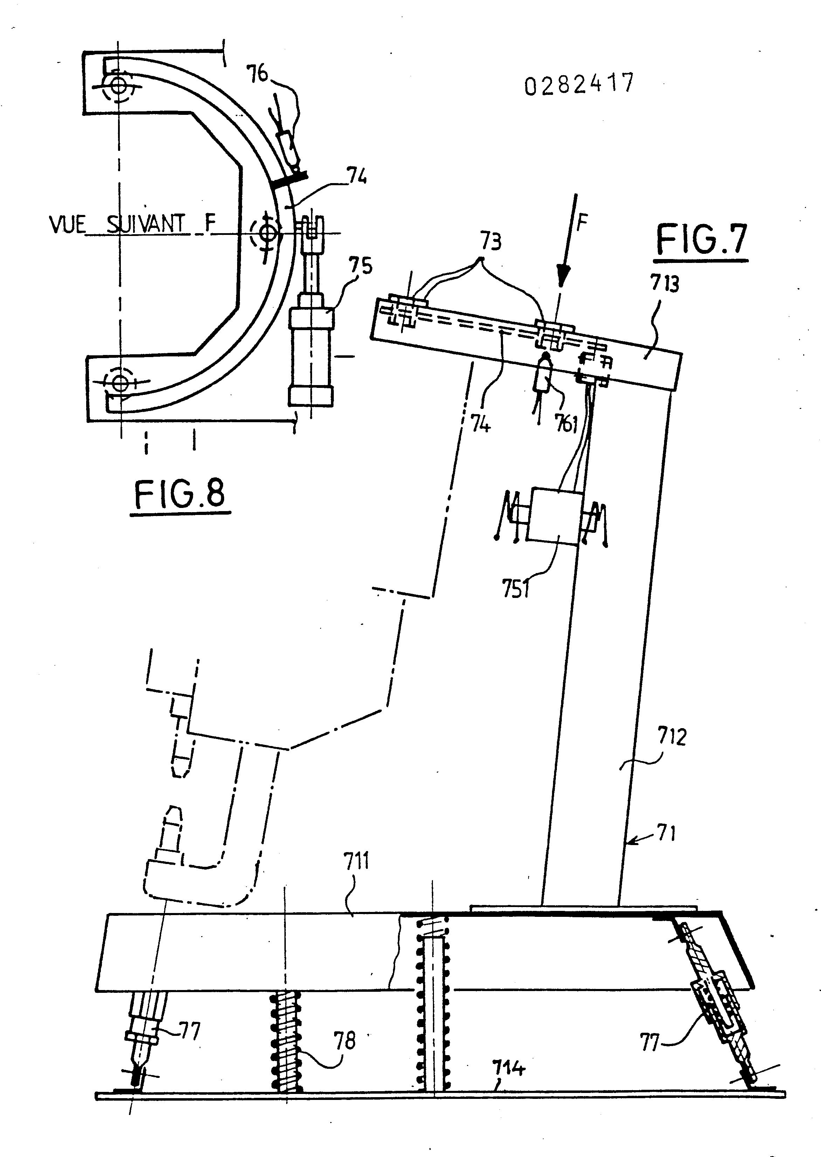

Le support d'outil illustré par la figure 7 est fixé au sol par l'intermédiaire d'une plaque 714 portant 3 ensembles de blocs ressorts 77 comportant des ressorts à boudin précontraints portant un châssis 71 servant à recevoir l'outil. Les axes de ces blocs-ressorts sont sensiblement concourants. Ils sont tarés à une valeur d'effort telle que les mouvements du support ne soient possibles qu'au-delà d'une faible valeur d'effort lorsque la pince repose sur le support. Des ressorts 78 montés verticalement entre la plaque 714 et le plateau 711 reprennent une partie de la masse agissent sur le plateau 711 du châssis 71. La présence de la pince est vérifiée par un détecteur de position 76. L'ensemble du support a ainsi un mouvement possible autorisant 3 degrés de liberté linéaires et des oscillations possibles en rotation mais fournissant une position d'équilibre répétitive.

Le châssis 71 est constitué par le plateau 711 solidaire d'une colonne 712 munie d'une plate-forme 713 échancrée sur un côté pour laisser passer l'interface outil et la pince. Cette plate-forme est équipée de douilles 73 dans lesquelles viennent s'implanter les pions 38 servant au centrage et au verrouillage de l'outil. Une came 74 pivotante autour des 3 douilles 73 assure le blocage de l'outil en plusieurs points. Cette rotation est commandée par un vérin pneumatique 75 à double effet et contrôlée par le détecteur de position 76. Une électrovanne 751 assure la commande du vérin. En position de blocage, la came 74 immobilise les pions 38 sur le support et assure le verrouillage de l'outil sur son support. La rotation de la came libère les pions.

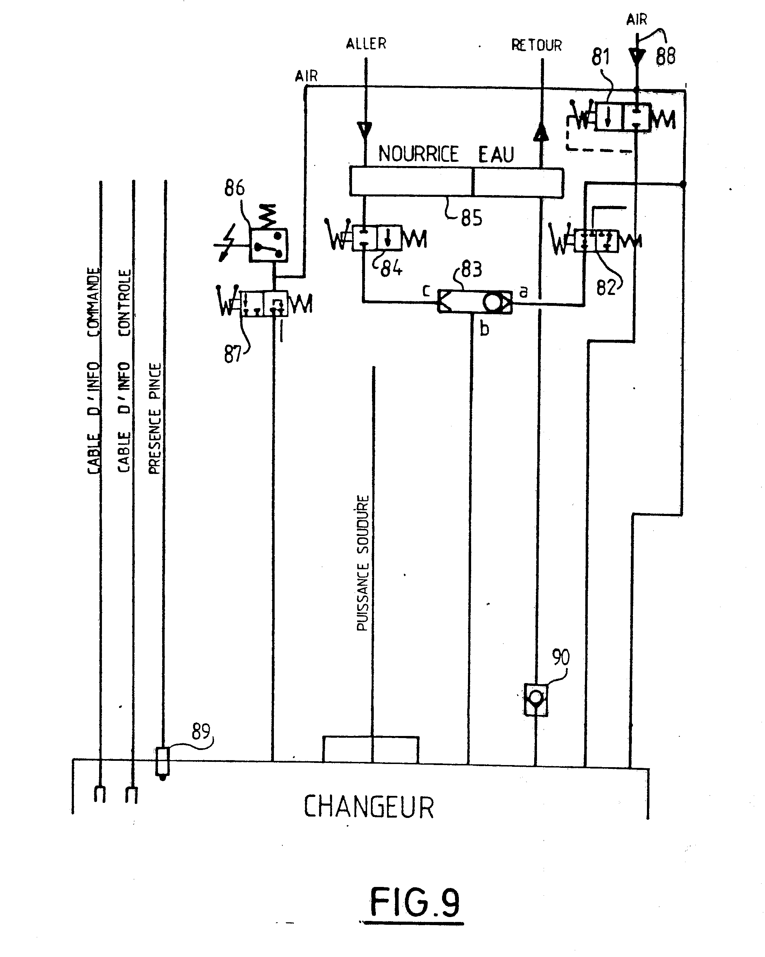

La figure 9 décrit le matériel équipant le robot et nécessaire à la commande du dispositif.

Le circuit d'air 88 se divise en 3 branches. L'une alimente le dispositif de verrouillage par une vanne tout ou rien 87 réalisant l'alimentation du vérin en position excitée et son échappement à l'état non excité. Un pressostat 86 vérifie le niveau de pression et interdit le fonctionnement du dispositif si celle-ci est inférieure à un seuil minimal.

La deuxième branche va directement à l'utilisation sur la pince via le changeur.

La troisième branche attaque une vanne 81 dite à pression proportionnelle.

Sur la deuxième branche, un piquage de pression est connecté à une vanne 82 tout ou rien deux positions et trois voies qui en position excitée permet le passage de l'air, et qui en position non excitée effectue une mise à l'échappement de l'utilisation. Ce circuit d'air communique avec l'orifice a d'un sélecteur de voie 83 qui permet le passage du fluide de la plus forte pression vers le changeur (orifice b). Le dernier orifice c de 83 est relié via une vanne de coupure 84 tout ou rien, 2 positions et deux voies (passante en position non excitée) au circuit d'alimentation en eau issue d'une nourrice d'eau 85 cloisonnée. Ce circuit d'eau sert au refroidissement de la pince et transite par les connecteurs 50 du changeur. Le retour s'effectue par la nourrice 85 via un clapet antiretour 90 destiné à protéger le changeur des contrepressions du circuit d'eau général.

Par ailleurs, on retrouve le reste du faisceau câble de puissance pince, câbles d'informations (commande et contrôle) et le câble de présence pince.

Le fonctionnement du dispositif va maintenant être expliqué.

On va décrire tout d'abord l'opération de prise d'outil.

Les pinces reposent et sont verrouillées sur les supports lors de la trajectoire d'approche. Le robot commande la mise sous pression de la tête de robot 10 en commandant la sortie reliée à l'électrovanne 87 qui devient passante. La chambre 21 monte en pression ce qui a pour effet de comprimer le ressort 14 et de déplacer le piston 13. Les billes 15 sont alors rentrées ou escamotées dans les logements du piston 13. Simultanément, la cavité 20 monte aussi en pression, le joint à lèvres 18 autorisant le passage de l'air de 21 vers 20. Le piston de bridage 12 par sa membrane 17 écrase alors les ressorts 16 au-delà de la précontrainte et sort du carter 11.

Le robot introduit alors le piston de bridage 12 dans l'alésage du corps 36 ce qui s'effectue par le centrage conique de la coiffe 22 et par la compliance du support sur ses appuis élastiques.

Durant cette trajectoire les pions 34 viennent positionner en rotation les deux interfaces 10 et 30 toujours grâce à la compliance du support.

En fin de la course d'approche le corps 36 est parfaitement centré par l'ajustement des diamètres 35 et 26.

Les connecteurs électriques (informations, puissance) et fluides (eau, air) assurent alors le contact entre les faces mobiles et les faces fixes. Sur les connecteurs de puissance, le plot 621 est écrasé et se déplace dans la course autorisée. Sur les connecteurs de fluide, le piston vient d'abord réaliser l'étanchéité puis libère le joint 59 et ouvre le circuit.

Le contact de la face 36 avec la face 27 est alors obtenu, l'effort d'appui des deux interfaces étant limité par les blocs ressorts du support qui s'est écrasé vers le sol.

La désexcitation de l'électrovanne 87 effectue la mise à échappement de la chambre 21 dans la tête d'accouplement du robot. Le piston 13 est alors rappelé par le ressort 14 qui commande la sortie des billes 15. La chambre 20 ne pouvant se vider que lentement à travers l'orifice calibré 181 puisque le joint à lèvres 18 joue le rôle de clapet antiretour, le piston porte-billes 12 ne restitue sa course qu'après la sortie des billes. Celles-ci sont alors mises en butée sur la face 32 et le corps 31 reste prisonnier du corps 11 sous un appui élastique fourni par les ressorts 16 précontraints.

Le capteur de position 89 détecte la présence de la pince sur robot et autorise alors le lâcher du verrouillage de la pince sur le support, ce qui s'obtient en excitant l'électrovanne de déverrouillage 751.

Le secteur came 74 libère par sa rotation les pions 38, la fin de ce mouvement étant contrôlée par le détecteur 76 qui autorise le départ du robot.

L'outillage entre alors dans une phase fonctionnelle de production où tous les connecteurs de fluide sont actifs.

On va décrire maintenant l'opération de dépose de l'outil.

Après une phase fonctionnelle de travail, la préparation de dépose d'outil commence lors de la trajectoire d'approche du support.

Le circuit de commande comprend des moyens pour réaliser la purge du circuit d'eau de refroidissement de l'outil avant la séparation de la tête d'accouplement et de l'outil.

Le circuit d'eau de refroidissement est isolé du changeur par l'activation de l'électrovanne 84 qui devient non passante. Simultanément, l'activation d'une autre sortie robot excite la vanne 82 qui devient passante permettant à l'air de s'introduire dans le circuit d'eau. Cette opération de purge nécessite quelques secondes pour remplacer l'eau par l'air jusqu'au moins au clapet 90.

Le robot étant toujours dans sa phase d'approche, la coupure de l'activation de la vanne 82 provoque la mise à échappement du circuit purgé. Simultanément, l'électrovanne proportionnelle 81 est mise à pression nulle pour favoriser la prise d'outil suivante. En variante, cette opération de décompression pourrait être faite par la vanne proportionnelle dans le cas d'une vanne 82 de type 2 voies.

Le robot présente l'outil devant le support et engage les 3 pions 38 dans les logements 73 de la platine. La poisition appuyée de la pince est détectée par 761 qui autorise le verrouillage de l'outil sur le support en activant par 751 le vérin 75. Cette opération une fois validée par 76 permet l'alimentation par la vanne 87 du module mécanique 10. La mise sous pression simultanée du piston 24 et du piston porte-billes 12 conduit à la libération de l'effort de plaquage du corps 31 et à la rentrée des billes et en conséquence à la désolidarisation des 2 interfaces 10 et 30. Le robot peut alors échapper la tête d'accouplement 10 qui est d'abord suivie par 30 sur la course d'écrasement des ressorts 77 du support. Le support ayant atteint son point de préréglage tous les plots électriques 611, 462 et les connecteurs de fluide 52 se détendent. L'étanchéité des circuits fluides s'effectuent par écrasement des joints 59 et enfin l'étanchéité plane du joint 58 cesse : le circuit s'ouvre après isolation des amenées fluide sur robot sur un tronçon de circuit isolé des sources, de plus purgé d'eau et détendu. Le fonctionnement de ce dispositif ne laisse subsister que quelques traces d'eau sur les connecteurs 552 lorsque la pince est libérée. Cette condition de fonctionnement à sec est essentielle compte tenu de la présence de haute tension sur les connecteurs 61. Le robot peut de nouveau sélectionner la prise d'une autre pince.

La gestion en sécurité des séquences ci-dessus est assurée par le logiciel d'application implanté sur la carte soudure présente dans la baie de commande du robot.

## Revendications

1/ Dispositif de changement d'outil de robot, comportant une tête d'accouplement montée à l'extrémité du bras du robot et coopérant avec un organe d'accouplement de l'outil, des éléments de connexion étant portés par la tête d'accouplement du robot et l'organe d'accouplement de l'outil pour assurer la continuité des lignes d'alimentation en énergie de l'outil, caractérisé par le fait que la tête d'accouplement du bras de robot présente un piston central de bridage (12) s'emmanchant dans un alésage (32, 33) de l'outil, ce piston étant soumis à des ressorts destinés à brider l'accouplement et qui sont comprimés pour le débridage et que les organes de connexion (40, 50, 60) sont disposés autour dudit piston de bridage.

2/ Dispositif selon la revendication 1, caractérisé par le fait que le piston central de bridage (12) porte des billes de verrouillage (15) mobiles radialement dans des logements de guidage (23) du piston sous l'action d'un ressort (14) susceptible d'être comprimé pour le débridage.

3/ Dispositif selon l'une quelconque des revendications précédentes, caractérisé par le fait que le tête d'accouplement comporte une alimentation en fluide sous pression susceptible de déplacer le piston de bridage (12) dans le sens du débridage et un piston interne (13) de manoeuvre des billes de verrouillage dans le sens du débridage.

4/ Dispositif selon l'une quelconque des revendications précédentes, caractérisé par le fait qu'il comporte au moins deux supports de réception d'outil constitués chacun par un châssis de support (71) monté sur des blocs ressorts (77) dont les axes sont sensiblement concourants et comportant un ressort à boudin précontraint.

5/ Dispositif selon la revendication 4, caractérisé par le fait que le châssis (71) est porté par des ressorts (78).

6/ Dispositif selon l'une quelconque des revendications précédentes, caractérisé par le fait que la commande de verrouillage de l'outil (3) sur son support de réception est assurée par une came (74) manoeuvrée par un vérin (75) en assurant un verrouillage de l'outil en plusieurs points.

7/ Dispositif selon l'une quelconque des revendications précédentes, caractérisé par le fait qu'il comporte au moins un connecteur électrique (40) présentant des plots de contact (462) déplaçables.

8/ Dispositif selon l'une quelconque des revendications précédentes, caractérisé par le fait qu'il comporte au moins un connecteur hydraulique (60) présentant un piston (52) mobile traversé par le fluide, assurant la connection étanche et fonctionnant comme un clapet lorsque la tête d'accouplement est séparée de l'outil.

9/ Dispositif selon la revendication 7, caractérisé par le fait que le connecteur comporte des moyens de blindage.

10/ Dispositif selon l'une quelconque des revendications précédentes, caractérisé par le fait qu'il comporte des moyens pour réaliser la purge du circuit d'eau de refroidissement de l'outil avant la séparation de la tête d'accouplement et de l'outil.

FIG.1

0282417

# FIG.2

FIG.3

0282417

FIG.4

FIG.5

FIG.6

0282417

VUE SUIVANT F

FIG.8

FIG.7

**FIG.9**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 139 758  (FANUC LTD) <br> * Page 6, ligne 16 - page 8, ligne 9 * <br> --- | 1-3 | B 25 J  15/04 // <br> B 23 K  11/36 |
| X | DE-A-3 347 423  (KIRST) <br> * Page 17, ligne 6 - page 19, ligne 7 * | 1-3 | |
| Y | --- | 7,8 | |
| A | FR-A-2 411 061  (REGIE NATIONALE DES USINES RENAULT) <br> * Page 2, ligne 30 - page 3, ligne 4 * <br> --- | 4,5 | |
| Y | DE-A-3 151 532  (LICENTIA PATENT-VERWALTUNGS GmbH) <br> * Revendication 12 * <br> --- | 7 | |
| Y | EP-A-0 043 153  (COMAU S.p.A.) <br> * Page 5, lignes 1-13 * <br> --- | 8 | |
| A | US-A-4 604 787  (SILVERS) <br> * Colonne 6, lignes 12-31 * <br> --- | 9 | |
| A | EP-A-0 120 275  (PONT-A-MOUSSON S.A.) <br> * Résumé; figure 3 * <br> --- | 1 | |
| A | US-A-4 046 263  (CWYCYSHYN) <br> * Colonne 3, lignes 29-44 * <br> ----- | 6 | |

**DOMAINES TECHNIQUES RECHERCHES (Int. Cl.4)**

B 25 J
B 23 K

**Le présent rapport a été établi pour toutes les revendications**

| Lieu de la recherche | Date d'achèvement de la recherche | Examinateur |
|---|---|---|
| LA HAYE | 09-05-1988 | LAMMINEUR P.C.G. |